(19) Europäisches Patentamt / European Patent Office / Office européen des brevets

(11) **EP 4 527 970 A1**

(12) **EUROPEAN PATENT APPLICATION**
published in accordance with Art. 153(4) EPC

(43) Date of publication:
**26.03.2025 Bulletin 2025/13**

(21) Application number: **22942863.6**

(22) Date of filing: **05.12.2022**

(51) International Patent Classification (IPC):
$C23C\ 2/02^{(2006.01)}$    $C23C\ 2/06^{(2006.01)}$
$C23C\ 2/40^{(2006.01)}$    $C21D\ 8/02^{(2006.01)}$
$C22C\ 38/14^{(2006.01)}$    $C22C\ 38/12^{(2006.01)}$
$C22C\ 38/04^{(2006.01)}$    $C22C\ 38/02^{(2006.01)}$
$C22C\ 38/00^{(2006.01)}$

(52) Cooperative Patent Classification (CPC):
**C21D 8/02; C22C 38/00; C22C 38/02; C22C 38/04; C22C 38/12; C22C 38/14; C23C 2/02; C23C 2/06; C23C 2/40**

(86) International application number:
**PCT/KR2022/019624**

(87) International publication number:
**WO 2023/224200 (23.11.2023 Gazette 2023/47)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **19.05.2022 KR 20220061294**

(71) Applicant: **Hyundai Steel Company
Incheon 22525 (KR)**

(72) Inventors:
• **PARK, Min Suh**
  **Incheon 22525 (KR)**
• **LA, Joung Hyun**
  **Incheon 22525 (KR)**
• **YOOK, Wan**
  **Incheon 22525 (KR)**
• **JANG, Min Ho**
  **Incheon 22525 (KR)**

(74) Representative: **Viering, Jentschura & Partner mbB
Patent- und Rechtsanwälte
Am Brauhaus 8
01099 Dresden (DE)**

(54) **ULTRA-HIGH STRENGTH GALVANIZED STEEL SHEET WITH EXCELLENT WELDABILITY AND MANUFACTURING METHOD THEREFOR**

(57) The present invention provides a method of manufacturing a method of manufacturing an ultra-high strength galvanized steel sheet with excellent, the method including a step of annealing a cold-rolled steel sheet in an annealing furnace, wherein an annealing time (A) for performing the annealing and a moisture concentration (B) in the annealing furnace are controlled based on the product of the positive square root ($A^{1/2}$) of the annealing time and the natural logarithm value ($\ln(1/B)$) of the reciprocal value of the moisture concentration.

FIG. 11

| ANNEALING TIME (A) (850°C) | MOISTURE CONCENTRATION (B) | | | | |
|---|---|---|---|---|---|
| | 10ppm (DP : −60°C) | 40ppm (DP : −50°C) | 375ppm (DP : −30°C) | 2600ppm (DP : −10°C) | 8500ppm (DP : +5°C) |
| 130s | – | −42.06 (COMPARATIVE EXAMPLE 4) | −67.58 (EXAMPLE 1) | −89.66 (EXAMPLE 4) | −103.16 (EXAMPLE 6) |
| 90s | – | −35 (COMPARATIVE EXAMPLE 3) | −56.23 (COMPARATIVE EXAMPLE 6) | −74.6 (EXAMPLE 2) | −85.84 (EXAMPLE 5) |
| 60s | −17.84 (COMPARATIVE EXAMPLE 2) | −28.57 (COMPARATIVE EXAMPLE 1) | −45.91 (COMPARATIVE EXAMPLE 5) | −60.91 (COMPARATIVE EXAMPLE 7) | −70.08 (EXAMPLE 3) |

EP 4 527 970 A1

**Description**

[Technical Field]

The present invention relates to a steel sheet and a manufacturing method thereof, and more particularly an ultra-high strength galvanized steel sheet with excellent weldability and a manufacturing method thereof.

[Background Art]

The automobile industry is focusing on fuel efficiency improvement and weight reduction to meet the demands of the times, such as resource depletion, rapid global warming, and high oil prices. Furthermore, as regulations on passenger safety gradually increase, ultra-high strength steels are being demanded. In addition, various improvements are required for galvanized steel sheets having excellent sacrificial properties to prevent the corrosion of steel by preemptively dissolving low-potential zinc when exposed to a corrosive environment. For example, there is a growing demand for improving the liquid metal embrittlement (LME) problem that a zinc plating layer melts during spot welding in an automobile assembly line, and the molten metal zinc penetrates toward the interface of a residual austenite present in the surface layer of a base steel, causing embrittlement.
As a related document, there is Korean Patent Application Publication No. 20200075949A.

[Disclosure]

[Technical Problem]

Therefore, the present invention has been made in view of the above problems, and it is one object of the present invention to provide an ultra-high strength galvanized steel sheet with excellent weldability and a manufacturing method thereof.
It will be understood that the technical problems are only provided as examples, and the technical idea of the present disclosure is not limited thereto.

[Technical Solution]

In accordance with an aspect of the present invention, the above and other objects can be accomplished by the provision of a method of manufacturing an ultra-high strength galvanized steel sheet with excellent weldability, the method including: annealing a cold-rolled steel sheet in an annealing furnace, wherein an annealing time (A) for performing the annealing and a moisture concentration (B) in the annealing furnace are controlled based on a product of a positive square root ($A^{1/2}$) of the annealing time and a natural logarithm value ($\ln(1/B)$) of a reciprocal value of the moisture concentration.
In the method of manufacturing an ultra-high strength galvanized steel sheet with excellent weldability, the annealing may be controlled such that the moisture concentration (B) in the annealing furnace increases as the annealing time (A) for performing the annealing is short.
In the method of manufacturing an ultra-high strength galvanized steel sheet with excellent weldability, the annealing may be controlled such that the annealing time (A) for performing the annealing increases as the moisture concentration (B) in the annealing furnace is low.
In the method of manufacturing an ultra-high strength galvanized steel sheet with excellent weldability, the cold-rolled steel sheet may include carbon (C): 0.1 to 0.5%; silicon (Si): 1.0 to 3.0%; manganese (Mn): 1.5 to 3.5%; phosphorus (P): greater than 0 and 0.02% or less; sulfur (S): greater than 0% and 0.01% or less; aluminum (Al): greater than 0% and 0.1% or less; and nitrogen (N): greater than 0% and 0.01% or less, based on % by weight and include the remainder being Fe and other unavoidable impurities.
In the method of manufacturing an ultra-high strength galvanized steel sheet with excellent weldability, the annealing may be performed at a temperature corresponding to a dual phase range of austenite and ferrite, the annealing may induce a decarburization reaction on the surface of the steel sheet, thereby the annealing may comprise transforming austenite present in a surface layer of the steel sheet into ferrite.
In the method of manufacturing an ultra-high strength galvanized steel sheet with excellent weldability, the annealing may be performed at an annealing temperature of 830 to 900°C.
In the method of manufacturing an ultra-high strength galvanized steel sheet with excellent weldability, the annealing may be performed under a condition where the annealing time (A) and the moisture concentration (B) in the annealing furnace satisfy Equation 1 below. Here, the unit of the annealing time (A) is seconds (s), and the unit of the moisture concentration (B) in the annealing furnace is ppm.

<Equation 1>

$$(A)^{1/2} \times \ln(1/B) \leq -65$$

The method of manufacturing an ultra-high strength galvanized steel sheet with excellent weldability may further include: after the annealing, first cooling the steel sheet at an average cooling rate of 1 to 20°C/s and at a temperature of 600°C or more and less than 800°C; second cooling the steel sheet at an average cooling rate of 20°C/s or more and a temperature of 200°C or more and less than 300°C; reheating the steel sheet up to 350°C to 490°C and maintaining it for 100 second or less; and performing zinc plating treatment on the steel sheet.

In the method of manufacturing an ultra-high strength galvanized steel sheet with excellent weldability, a microstructure of a single phase of ferrite may be formed on a surface layer of the steel sheet after performing the zinc plating treatment, and a decarburization layer formed on the surface layer of the steel sheet may have a thickness of 18 $\mu$m or more.

In the method of manufacturing an ultra-high strength galvanized steel sheet with excellent weldability, an applicable welding current range of the galvanized steel sheet may be 6.0 kA to 7.5 kA.

In accordance with another aspect of the present invention, there is provided an ultra-high strength galvanized steel sheet with excellent weldability, including: a base steel including carbon (C): 0.1 to 0.5%; silicon (Si): 1.0 to 3.0%; manganese (Mn): 1.5 to 3.5%; phosphorus (P): greater than 0 and 0.02% or less; sulfur (S): greater than 0% and 0.01% or less; aluminum (Al): greater than 0% and 0.1% or less; nitrogen (N): greater than 0% and 0.01% or less, based on % by weight,; the remainder being Fe and other unavoidable impurities; and a zinc-plated layer formed on the base steel, wherein a microstructure of a single phase of ferrite is formed on a surface layer of the base steel in contact with the zinc-plated layer, and a decarburization layer formed on the surface layer of the base steel has a thickness of 18 $\mu$m or more, wherein the microstructure of the base steel includes 0 to 40% of ferrite, 10 to 30% of residual austenite and a remainder being martensite.

In the ultra-high strength galvanized steel sheet with excellent weldability, an applicable welding current range of the galvanized steel sheet may be 6.0 kA to 7.5 kA, and, when welding the galvanized steel sheet, the possibility of liquid metal embrittlement (LME) that the zinc-plated layer melts and penetrates the surface of the base steel to cause embrittlement may be 0%.

[Advantageous effects]

In accordance with the present invention, an ultra-high strength galvanized steel sheet with excellent weldability and a manufacturing method thereof can be implemented.

The effects of the present invention are described only as examples, and the scope of the present invention is not limited by these effects.

[Description of Drawings]

FIG. 1 is a flowchart illustrating a method of manufacturing an ultra-high strength galvanized steel sheet according to an embodiment of the present invention.

FIG. 2 illustrates subsequent heat treatment (annealing, cooling, reheating) steps applied to a cold-rolled steel sheet in a method of manufacturing an ultra-high strength galvanized steel sheet with excellent weldability according to an embodiment of the present invention.

FIG. 3 illustrates a photograph of the appearance of a liquid metal embrittlement crack occurring in a galvanized steel sheet as a comparative example of the present invention.

FIG. 4 illustrates an outline of a decarburization reaction in the method of manufacturing an ultra-high strength galvanized steel sheet according to an embodiment of the present invention.

FIGS. 5 to 7 are photographs illustrating cross-sections including the surface layer of steel, elongation test evaluation results, and the occurrence of liquid metal embrittlement (LME) cracks, respectively, under 800°C Gleeble test temperature and normal dew point (DP<-45°C) conditions in the first experimental example of the present invention.

FIGS. 8 to 10 are photographs illustrating a cross-section of steel, an elongation test evaluation result, and the occurrence of liquid metal embrittlement (LME) crack, respectively, under 800°C Gleeble test temperature and high dew point (DP 0°C) conditions in the first experimental example of the present invention.

FIG. 11 shows the product of the positive square root ($A^{1/2}$) of the annealing time (A) and the natural logarithm value ($\ln(1/B)$) for the reciprocal value of the moisture concentration (B) in the annealing furnace according to the second experimental example of the present invention.

FIG. 12 shows the thickness of the decarburization layer, formed on the surface layer of the base steel, dependent upon the annealing time (A) and the moisture concentration (B) in the annealing furnace according to the second experimental example of the present invention.

FIG. 13 shows the liquid metal embrittlement (LME) occurrence rate dependent upon the annealing time (A) and the moisture concentration (B) in the annealing furnace according to the second experimental example of the present invention.

FIG. 14 shows the results of applying the spot welding process according to the third experimental example.

[Best Mode]

Hereinafter, preferred embodiments of the present invention will be described in detail with reference to the accompanying drawings. Embodiments of the present disclosure are provided to more completely explain the technical idea of the present disclosure to those skilled in the art, and the following embodiments may be modified in many different forms, but the scope of the technical idea of the present disclosure is not limited to the following embodiments. Rather, the embodiments are provided to make the disclosure thorough and complete and to fully convey the technical idea of the disclosure to those skilled in the art. Like reference numerals in the specification denote like elements. Further, various elements and regions in the drawings are schematically drawn. Therefore, the technical idea of the invention is not limited by the relative size or spacing drawn in the accompanying drawings.

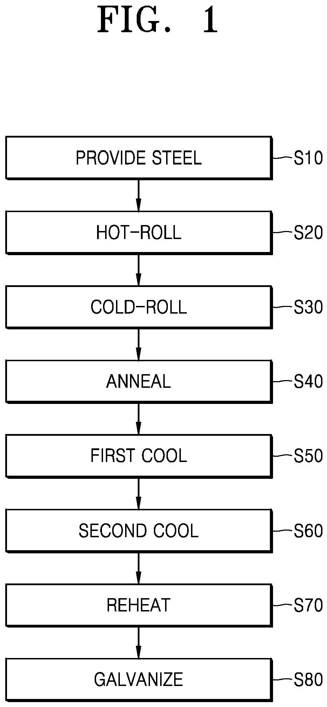

FIG. 1 is a flowchart illustrating a method of manufacturing an ultra-high strength galvanized steel sheet according to an embodiment of the present invention.

Referring to FIG. 1, the method of manufacturing an ultra-high strength galvanized steel sheet according to an embodiment of the present invention includes a step (S10) of providing steel, a step (S20) of hot-rolling the steel to form a hot-rolled steel sheet, a step (S30) of cold-rolling the hot-rolled steel sheet to form a cold-rolled steel sheet, a step (S40) of annealing the cold-rolled steel sheet, a step (S50, S60) of first and second cooling the annealed steel sheet, a step (S70) of reheating the cooled steel sheet, and a step (S80) of zinc plating treatment on the steel sheet.

The method of manufacturing an ultra-high strength galvanized steel sheet with excellent weldability according to the technical idea of the present invention includes the step (S40) of annealing the cold-rolled steel sheet in an annealing furnace, wherein an annealing time (A) for performing the annealing and a moisture concentration (B) in the annealing furnace are controlled based on the product of the positive square root ($A^{1/2}$) of the annealing time and the natural logarithm value ($\ln(1/B)$) of the reciprocal value of the moisture concentration. For example, the annealing step (S40) may be performed under conditions where the annealing time (A) and the moisture concentration (B) in the annealing furnace satisfy Equation 1 below:

<Equation 1>

$$(A)^{1/2} \times \ln(1/B) \le K$$

(where K is a predetermined constant value)

As an example of the method of manufacturing an ultra-high strength galvanized steel sheet with excellent weldability, the annealing may be controlled such that the moisture concentration (B) in the annealing furnace increases as the annealing time (A) for performing the annealing becomes shorter.

As another example of the method of manufacturing an ultra-high strength galvanized steel sheet with excellent weldability, the annealing may be controlled such that the annealing time (A) for performing the annealing increases as the moisture concentration (B) in the annealing furnace becomes lower.

According to this configuration, when welding the galvanized steel sheet, the zinc-plated layer melts and penetrates the surface of the base steel to suppress the occurrence of liquid metal embrittlement (LME), and the thickness of a decarburization layer formed on the surface of the steel sheet may be 18 $\mu$m or more.

The present invention is not limited to the superficial recognition that liquid metal embrittlement (LME) is alleviated when the hardness of a surface layer is lowered due to surface decarburization, and recognizes the problem that it is difficult to optimize a decarburization layer only with the dew point in an annealing furnace, and discloses the technical idea based on an integrated consideration of an annealing time and dew point according to an annealing temperature so as to secure optimal decarburization conditions.

Hereinafter, the method of manufacturing an ultra-high strength galvanized steel sheet with excellent weldability according to an embodiment of the present invention is described in detail.

## Steel provision step (S10)

Recently, the automobile industry has been increasingly interested in lightweight car bodies using ultra-high strength steel to simultaneously satisfy crash safety and fuel efficiency regulations. In the steel industry, research is actively underway to develop an ultra-high strength steel to meet the needs of customer automakers. The Quenching and Partitioning (Q&P) heat treatment technology, developed to simultaneously secure high strength and high ductility in automotive steel materials, suppresses the formation of carbon precipitates from carbon released from a martensite structure during quenching and allows carbon to diffuse into a residual austenite structure through partitioning. Through the re-diffusion of carbon, the residual austenite structure can be stabilized even at room temperature, and high ductility due to the residual austenite structure and high strength due to the martensite structure can be ultimately secured.

These Q&P steel sheets contain a large amount of substitutional solid-solution alloy elements such as silicon (Si) and aluminum (Al) that inhibit the movement of iron (Fe) atoms to suppress the formation of carbide precipitates within the structure, compared to general steel, and also contain a large amount of austenite-stabilizing alloy elements such as carbon (C) and manganese (Mn) to increase the volume fraction of stabilized residual austenite structure and improve Transformation-Induced Plasticity (TRIP) behavior.

Meanwhile, it is obvious that the technical idea of the present invention can be applied to the above-described Q&P steel sheet, but it is obvious that the technical idea of the present invention can be widely applied to various steel sheets and is not limited to the application of the Q&P steel sheet.

Hereinafter, the roles and contents of exemplary components included in the ultra-high strength cold-rolled steel sheet according to an embodiment of the present invention are described. Here, the contents of the component elements all mean "% by weight".

Carbon (C): 0.1 to 0.5%

Carbon is the most important alloying element in steelmaking, and its main purpose is to play a basic strengthening role and stabilize austenite. High carbon concentration in austenite improves austenite stability, making it easy to secure appropriate austenite for material improvement High carbon concentration in austenite improves austenite stability, making it easy to secure appropriate austenite for material improvement. When the content of carbon is less than 0.1%, it is difficult to secure a desired yield strength and elongation. When the content of carbon is greater than 0.5%, it may cause a decrease in weldability due to an increase in carbon equivalent. Accordingly, it is preferred that the content of carbon is 0.1% to 0.5% based on the total weight of the steel sheet.

Silicon (Si): 1.0 to 3.0%

Silicon, which is an element that suppresses the formation of carbides (e.g., $Fe_3C$) in ferrite, increases the activity of carbon, thereby increasing the diffusion rate of austenite. Silicon, which is well known as a ferrite stabilizing element, is also known as an element that increases ductility by increasing the ferrite fraction during cooling. When the content of silicon is less than 1.0%, the effect of adding silicon is insufficient. When the content of silicon exceeds 3.0%, oxide ($SiO_2$) is formed on the surface of a steel sheet during the process, which may result in a decrease in plating properties due to the wettability degradation of the corresponding portion. Accordingly, it is preferred that the content of silicon is 1.0 to 3.0% based on the total weight of the steel sheet.

Manganese (Mn): 1.5 to 3.5%

Manganese is an austenite stabilizing element. As manganese is added, the martensite transformation start temperature, Ms, gradually decreases, which may cause the effect of increasing the residual austenite fraction during a continuous annealing heat treatment process. When the content of manganese is less than 1.5%, the effect of adding manganese is insufficient. When the content of manganese is greater than 3.5%, the carbon equivalent increases, which significantly reduces weldability. In addition, oxides (MnO) are formed on the surface of a steel sheet during the process, which may result in reduced plating properties due to wettability degradation in the portion. Accordingly, it is preferred that the content of manganese is 1.5 to 3.5% based on the total weight of the steel sheet

Phosphorus (P): greater than 0% and 0.02% or less

Phosphorus can play a role similar to silicon in steel. However, when phosphorus is added in excess of 0.02% of the total weight of the steel sheet, it may lower the weldability of a steel sheet and increase embrittlement, which may cause material degradation. Accordingly, it is preferred to limit the content of phosphorus to greater than 0% and 0.02% or less of the total weight of the steel sheet.

Sulfur (S): greater than 0% and 0.01% or less

Sulfur is an element that is inevitably included in the production of steel, which inhibits the toughness and weldability of steel, and reduces the corrosion resistance and impact characteristics of steel by combining with manganese (Mn) to form MnS. Accordingly, it is preferred to limit the content of sulfur to greater than 0% and 0.01% or less of the total weight of the steel sheet.

Aluminum (Al): greater than 0% and 0.1% or less

Aluminum (Al) has a similar effect to silicon (Si), and mainly plays a role in strengthening solid solution and suppressing carbide formation. It is an element that is mainly added for the purpose of deoxidation, suppresses the formation of carbides to effectively form a residual austenite phase, and improves the strength-elongation balance. When the content of aluminum (Al) is greater than 0.1%, the processability of the steel sheet may deteriorate due to an increase in inclusions such as alumina. Accordingly, it is preferred to add aluminum (Al) to 0.1% or less of the total weight of the steel sheet.

Nitrogen (N): greater than 0% and 0.01% or less

Nitrogen (N) is an element that deteriorates the aging resistance, and when the amount of nitrogen exceeds 0.01%, the aging resistance deteriorates significantly. In addition, Nitrogen (N) combines with boron (B) to form BN and consumes boron (B). For this reason, nitrogen (N) reduces the quenching property due to solid solution boron (B), making it difficult to secure a tempered martensite phase with a predetermined area ratio. In addition, nitrogen (N) exists as an impurity element in ferrite and reduces ductility by deformation aging. Accordingly, the content of nitrogen (N) is preferably low. Accordingly, it is preferred to limit the content of nitrogen (N) to greater than 0% and 0.01% or less of the total weight of the steel sheet.

Meanwhile, the ultra-high strength cold-rolled steel sheet according to an embodiment of the present invention may selectively further contain any combination of the following components in addition to the composition described above.

At least one of titanium (Ti), niobium (Nb) and vanadium (V): greater than 0% and 0.1% or less

Titanium (Ti), niobium (Nb), and vanadium (V) elements are main elements that are precipitated in the form of carbides in steel, and the purpose of the present invention is to secure the stability of residual austenite and improve strength through initial austenite grain refinement due to the formation of precipitates, and improve strength through initial austenite grain refinement due to the formation of precipitates, and to achieve precipitation hardening by ferrite grain refinement and the presence of precipitates in ferrite. That is, they are elements that combine with carbon (C) or nitrogen (N) to precipitate in the form of NbC, NbN, TiC, TiN, VC, or VN, or improve the strength of a steel sheet through solid solution strengthening in iron (Fe). For example, titanium (Ti) is effective in improving strength by forming carbonitrides or sulfides, and can suppress the formation of boron nitride (BN) by combining with nitrogen to precipitate titanium nitride (TiN), so titanium (Ti) is effective in expressing quenching properties by boron (B). Niobium (Nb) is an element that contributes to improving the strength of a base material through the precipitation strengthening effect by forming NbC precipitates through combination with carbon (C) when added in small amounts. Vanadium (V) is added as a strengthening element, just like niobium (Nb).

When the total sum of the above elements exceeds 0.1% of the entire steel sheet, excessive precipitates may be generated in a ferrite phase in addition to an increase in manufacturing cost, which may cause excessive precipitation strengthening, reduce the elongation of the steel sheet, and cause low-temperature toughness and weldability to deteriorate due to a large amount of precipitates. Accordingly, it is limited to 0.1% or less.

Chromium (Cr): greater than 0% and 0.8% or less

Chromium (Cr) is an element with high hardenability and is added to increase strength through transformation strengthening. However, when the chromium (Cr) exceeds 0.8% by weight, an upper bainite-like structure is formed, which makes the overall structure uneven, thereby lowering toughness. Accordingly, it is preferred to control the content to 0.8% by weight or less.

Molybdenum (Mo): greater than 0% and 0.5% or less

Molybdenum (Mo) is an element with greater hardenability than chromium (Cr) described above and is added to increase strength through transformation strengthening. When it exceeds 0.5% by weight in the carbon (C) component range of the present invention, a large amount of a light secondary phase such as a martensite/austenite (MA) phase is formed, which reduces the toughness. Accordingly, it is preferred to control the content to 0.5% by weight.

The remaining component of the ultra-high strength cold-rolled steel sheet is iron (Fe). However, since unintended impurities may inevitably be added from raw materials or a surrounding environment during a normal steelmaking process, they cannot be excluded. Since these impurities are known to anyone skilled in the art of manufacturing, they are not specifically mentioned in this specification.

In the manufacturing method according to the present invention, a semi-finished product that is a target of the hot rolling and cold rolling processes may be, for example, a slab. The slab in a semi-finished state may be obtained through a continuous casting process after obtaining molten steel of a predetermined composition through a steelmaking process.

## Hot-rolling step (S20)

A step (S20) of forming a hot-rolled steel sheet by applying a hot-rolling process to the steel is performed.

Since the steel is a high alloy steel, it is necessary to minimize edge bursting and rolling load to ensure mass production, so the rolling finishing temperature and coiling temperature can be set to a high-temperature range.

The steel is reheated at a temperature of Ac3 or higher, for example, at a slab reheating temperature (SRT) in a range of 1150°C to 1250°C. Through this reheating, re-dissolution of segregated components and re-dissolution of precipitates may occur during casting. When the reheating temperature is less than 1150°C, a problem of a rapid increase in the hot rolling load may occur. If the reheating temperature exceeds 1250°C, it may be difficult to charge into and discharge from a heating furnace due to slab bending, and it may be difficult to secure the strength of a final produced steel sheet due to coarsening of the initial austenite grains. The reheating temperature may vary depending on steel.

Next, the reheated steel is hot-rolled. The hot-rolling may be performed at a finish delivery temperature (FDT) of, for example, 850°C to 1000°C. When the FDT is higher than 1000°C, there is a concern that the quality of the steel sheet may deteriorate due to the occurrence of surface scale on the steel sheet. In addition, when the FDT is lower than 850°C, an increase in rolling load and a decrease in productivity may occur. The finish delivery temperature may vary depending on steel.

Next, the hot-rolled steel is cooled at a cooling rate of 10 to 30°C/s, and then coiled at a coiling temperature (CT) of, for example, 500°C to 700°C. The coiling temperature may vary depending on steel. When the coiling temperature is higher than 700°C, an unwanted internal oxidation layer may be generated in a hot-rolled steel sheet or a coiled hot-rolled coil. Since the internal oxidation of the coiled hot-rolled coil thus has a deviation, it may be difficult to uniformly control the thickness of the internal oxidation layer. When the coiling temperature is lower than 500°C, an undesirable low-temperature structure may be formed.

## Cool-rolling step (S30)

A step (S30) of forming a cold-rolled steel sheet by applying a cold-rolling process to the hot-rolled steel sheet is performed.

Meanwhile, in the method of manufacturing an ultra-high strength galvanized steel sheet with excellent weldability according to an embodiment of the present invention, a softening heat treatment step and a pickling step may be sequentially performed before performing a cold-rolling process.

In the softening heat treatment step, the hot-rolled steel sheet is subjected to softening heat treatment to realize material softening, thereby alleviating the reduction rate load problem and shape defect problem during subsequent cold rolling. That is, the softening heat treatment may secure cold rolling properties by making the hot-rolled steel sheet soft through the softening heat treatment for the efficiency of the cold rolling operation. When the strength of a hot-rolled steel sheet is high, problems such as thickness hunting and shape defects may occur during cold rolling. However, in the case of the ultra-high strength steel softening heat treatment process according to the present invention, it is applied to hot-rolled coils with remaining scales, not cold-rolled coils, so a countermeasure for the change in surface characteristics due to the high-temperature reaction of the scale during the softening heat treatment is required. In general, it is known that in the case of ultra-high strength steels containing a lot of Si and Mn among steel types, internal oxides are generated along the grain boundary of a base steel at high temperatures along with scale. The oxide layer formed by internal oxidation has poor pickling properties because the main component of the matrix is Fe. Therefore, there is a problem that the internal oxide layer cannot be completely removed with the same pickling time as general hot-rolled steel sheets, and a long pickling time is required, which reduces productivity. This internal oxidation occurs when the activity of easily oxidized elements such as Si and Mn is high and exists under specific oxygen partial pressure conditions. Therefore, when hot-rolled coils with remaining scales are heat-treated in a high-temperature reducing gas atmosphere, additional internal oxidation occurs due to oxygen generated during the scale reduction reaction. Internal oxides, which were not observed in the hot rolled steel, developed unevenly over the entire coil length after the softening heat treatment, and the scale reduction and internal oxidation development behaviors may differ depending on the location within the coiled coil. In the case of the coil outer winding subjected to the softening heat treatment, internal oxidation growth due to scale hydrogen reduction reaction was mainly observed, and in the case of the coil inner winding, internal oxidation growth due to scale eutectoid reaction ($4FeO \rightarrow 4Fe + 2O_2$) was observed. This difference in internal oxidation growth behavior was determined to be due to a difference in the ease of penetration of reaction gas depending on the coiled-coil position, and it was understood that oxygen generated from the scale hydrogen reduction and eutectoid reaction during the softening heat treatment diffused to a base material and acted as an internal oxidation reaction material. Since the internal oxidation layer is preferably formed as uniformly as possible on the entire steel sheet, it is preferable to suppress the internal oxidation layer in the coiling step as much as possible and form the internal oxidation layer in the softening heat treatment. Considering these aspects, in the method of manufacturing the ultra-high strength cold-rolled steel sheet of the present invention, the coiling temperature is adjusted to 500°C to 700°C and the softening heat treatment temperature is adjusted to 500°C to 650°C. The softening heat treatment may be performed in a batch annealing furnace (BAF) in a state in which the hot-rolled steel sheet is coiled, and may be performed in a hydrogen atmosphere. The hot-rolled steel sheet that has undergone softening heat treatment under the process conditions can secure cold rolling properties because its material is softened.. In addition, since the internal oxidation layer formed by the softening heat treatment has a predetermined thickness (e.g., a thickness of 10 $\mu$m or less), subsequent pickling properties can be secured simultaneously.

When softening heat treatment is applied at a temperature of 500°C or less, the degree of softening of the material of the hot-rolled steel sheet that has undergone softening heat treatment is so small that it is difficult to secure subsequent cold rolling properties. That is, when the softening heat treatment is performed, austenite is excessively formed, and martensite is formed during cooling, so the strength reduction may not be effectively expressed.

In addition, when the softening heat treatment is applied at a temperature exceeding 650°C, the internal oxidation layer formed by the softening heat treatment has a thickness exceeding 10$\mu$m, making it difficult to secure subsequent pickling properties.

Meanwhile, in the method of manufacturing an ultra-high strength galvanized steel sheet with excellent weldability according to an embodiment of the present invention, whether to apply the softening heat treatment step may be optional depending on the steel type or target strength. For example, if the target tensile strength after cold rolling/annealing is 1180 MPa or more, the softening heat treatment step may be performed, and if the target tensile strength after cold rolling/annealing is 980 MPa, the softening heat treatment step may not be performed. The time for performing the softening heat treatment may be 1 to 12 hours.

In the pickling treatment step, the hot-rolled steel sheet may be pickled with acid after performing the softening heat treatment. The hot-rolled steel sheet may be pickled to remove at least a portion of the internal oxidation layer. The pickling treatment may be performed, for example, at a temperature of 70°C to 90°C, with a hydrochloric acid concentration of 5% to 15%, for example, for 20 to 40 seconds. In addition, an inhibitor concentration of 0.1 to 0.5 % may be used.

In the cold-rolled steel sheet formation step (S30), the hot-rolled steel sheet that has been pickled may be cold-rolled at an average reduction rate of, for example, 40% to 60% and a pressing force of, for example, 700 tons to 1,800 tons, thereby producing a cold-rolled steel sheet. The microstructure of the cold-rolled steel sheet has a shape in which the structure of the hot-rolled steel sheet is extended, and the microstructure of a steel sheet to be finally produced is determined in subsequent heat treatment.

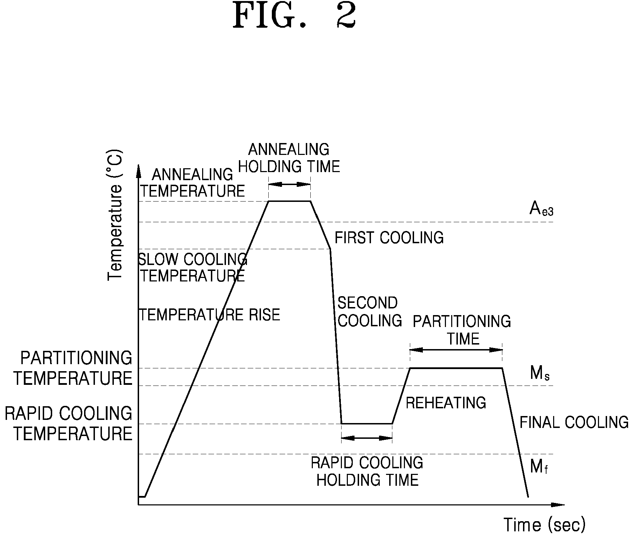

FIG. 2 illustrates subsequent heat treatment (annealing, cooling, reheating) steps applied to a cold-rolled steel sheet in a method of manufacturing an ultra-high strength galvanized steel sheet with excellent weldability according to an embodiment of the present invention.

**Annealing step (S40)**

Referring to FIG. 2, the cold-rolled steel sheet is annealed in a continuous annealing furnace with a normal slow cooling section. The annealing heat treatment may be performed at a temperature corresponding to the dual phase range of austenite and ferrite. By performing heat treatment in the dual phase zone, an appropriate fraction of ferrite can be secured, and ideal ferrite, tempered martensite, and residual austenite can be implemented in the final microstructure to obtain the target material of the steel sheet.

Annealing heat treatment temperature and annealing time affect an austenite grain size, and accordingly, can have a great influence on the strength of a cold-rolled steel sheet. The annealing heat treatment is performed at a heating rate of, for example, 1°C/s or higher, for example, at a heating rate in the range of 1°C/s to 15°C/s. When the heating rate is less than 1°C/s, it takes a long time to reach the target annealing temperature, which reduces production efficiency and may increase the grain size. The annealing heat treatment may be performed, for example, at a temperature of Ae1 or higher, for example, at a temperature in the range of 830°C to 900°C.

Meanwhile, as the annealing time, which is the time for performing the annealing heat treatment, increases, it affects the coarsening due to the growth of austenite grains, just like the annealing heat treatment temperature.

The present invention confirmed that, by controlling the annealing time (A) for performing the annealing and the moisture concentration (B) in the annealing furnace, the possibility of liquid metal embrittlement (LME), which causes embrittlement due to melting of the zinc-plated layer and penetration of the surface of the base steel during welding of the zinc-plated steel sheet, can be suppressed, and the thickness of the decarburization layer formed on the surface of the steel sheet can be controlled.

Specifically, the annealing time (A) for performing the annealing and the moisture concentration (B) in the annealing furnace may be controlled based on the product of the positive square root ($A^{1/2}$) of the annealing time and the natural logarithm value ($\ln(1/B)$) of the reciprocal value of the moisture concentration. For example, the annealing step (S40) may be performed under conditions where the annealing time (A) and the moisture concentration (B) in the annealing furnace satisfy Equation 1 below:

$$<\text{Equation 1}>$$

$$(A)^{1/2} \times \ln(1/B) \leq K$$

(where K is a predetermined constant value)

As an example of the method of manufacturing an ultra-high strength galvanized steel sheet with excellent weldability, the annealing may be controlled such that the moisture concentration (B) in the annealing furnace increases as the annealing time (A) for performing the annealing is short.

As another example of the method of manufacturing an ultra-high strength galvanized steel sheet with excellent weldability, the annealing may be controlled such that the annealing time (A) for performing the annealing increases as the moisture concentration (B) in the annealing furnace is low.

According to this configuration, the possibility of liquid metal embrittlement (LME), in which the zinc-plated layer melts and penetrates the surface of the base steel to cause embrittlement, when welding the galvanized steel sheet can be suppressed, and the thickness of the decarburization layer formed on the surface layer of the steel sheet may be 18 $\mu$m or more.

### First and second cooling steps (S50, S60)

The annealed cold-rolled steel sheet is multi-cooled. Specifically, a first cooling step (S50) of the annealed steel sheet and a second cooling step (S60) of the annealed steel sheet may be performed.

The step (S50) of first cooling the steel sheet at an average cooling rate of 1 to 20°C/s to a temperature of 600°C or more and less than 800°C is a slow cooling step, and attempts to secure a certain amount of ferrite in the final microstructure during the heat treatment process, thereby securing the plasticity of the final microstructure. When the cooling end temperature of the slow cooling is less than 600°C, ferrite transformation may occur in an undesirable amount, which may decrease strength.

Next, the step (S60) of second-cooling the annealed steel sheet at an average cooling rate of 20°C/s or more, preferably 50°C/s or more, at 200°C or more and less than 300°C is a rapid cooling step, can easily secure the final material by transforming austenite in the microstructure into martensite after the slow cooling through rapid cooling end temperature control, and requires an average cooling rate of 20°C/s or more to suppress the phase transformation that may occur during the rapid cooling process.

Next, the second-cooled cold-rolled steel sheet may be maintained at the second cooling end temperature of 200°C or more and less than 300°C for, for example, for a time from 1 second to 100 seconds. In the holding time after the rapid cooling, initially, temperature homogenization of the steel may proceed. The second cooling end temperature may be a temperature between the martensite transformation start temperature ($M_s$) and the martensite transformation completion temperature ($M_f$).

Next, while maintaining the temperature isothermally at the second cooling end temperature, some of the residual austenite may be transformed into lower bainite, etc.

### Reheating step (S70)

The multi-cooled cold-rolled steel sheet may be reheated at a heating rate ranging from, for example, 1°C/s to 50°C/s, and maintained at a temperature ranging from, for example, 350°C to 490°C for 100 seconds or less to perform partitioning heat treatment. The partitioning heat treatment temperature may be higher than the martensite transformation start temperature (Ms). The purpose of the reheating process is to secure strength and elongation through carbon enrichment and martensite tempering in the residual austenite during the process, and finally to maintain the final microstructure composition.

If the partitioning heat treatment temperature is lower than 350°C, the partitioning effect may be insufficient. If the partitioning heat treatment temperature exceeds 490°C, the size of carbide may become coarser and the strength may decrease. The partitioning heat treatment holding time may have less influence compared to the partitioning temperature. If the partitioning heat treatment holding time exceeds 100 seconds, the heat treatment efficiency may decrease, the carbide size may increase, and the strength may decrease. The partitioning heat treatment step may be performed immediately after the multi-cooling described above, or after maintaining it at room temperature for several minutes or more. In the case of non-plated materials, it is cooled to room temperature, for example, to a temperature in the range of 0°C to 40°C after the partitioning heat treatment step is completed.

The multi-cooling steps (S50, S60) and the reheating step (S70) correspond to the Quenching and Partitioning (Q&P) heat treatment steps developed to simultaneously secure the high strength and high ductility of steel materials, and is a technology that suppresses the formation of carbon precipitates from carbon released from the martensite structure during quenching and allows carbon to diffuse into the residual austenite structure through partitioning. Through the re-diffusion of carbon, the residual austenite structure can be stabilized even at room temperature, and, ultimately, high ductility due to the residual austenite structure and high strength due to the martensite structure can be secured.

**Zinc plating treatment step (S80)**

A step (GI) of immersing the annealed cold-rolled steel sheet in a molten zinc plating bath to perform molten zinc plating to form a molten zinc-plated steel sheet may be performed, and a step (GA) of heat-treating for alloying the cold-rolled steel sheet and molten zinc-plated steel sheet, on which the molten zinc-plated layer is formed, to form an alloyed molten zinc-plated steel sheet may be further performed.

A plating material can enter a plating bath as is without cooling to room temperature after the partitioning heat treatment step is performed.

The entry temperature of the plating bath may be, for example, 460°C, and the plating bath may be a zinc plating bath containing 0.11 to 0.22% by weight of aluminum and saturated Fe. Alternatively, the plating bath may be a Zn-Mg-Al plating bath. Meanwhile, the heat treatment temperature for alloying may be 450 to 600°C.

The ultra-high strength galvanized steel sheet with excellent weldability according to an embodiment of the present invention implemented by performing the above-described steps may include, a base steel containing, for example, carbon (C): 0.1 to 0.5%, silicon (Si): 1.0 to 3.0%, manganese (Mn): 1.5 to 3.5%, phosphorus (P): greater than 0 and 0.02% or less, sulfur (S): greater than 0% and 0.01% or less, aluminum (Al): greater than 0% and 0.1% or less, nitrogen (N): greater than 0% and 0.01% or less, at least one of titanium (Ti), niobium (Nb) and vanadium (V): greater than 0% and 0.1% or less, based on % by weight, the remaining iron (Fe) and other unavoidable impurities; and a zinc-plated layer formed on the base steel, wherein a surface layer of the base steel in contact with the zinc-plated layer has a microstructure of a single phase of ferrite, the decarburization layer formed on the surface layer of the base steel has a thickness of 18 $\mu$m or more, and the microstructure of the base steel includes 0 to 40% (including 0%) of ferrite, 10 to 30% of residual austenite and the remainder being martensite.

For example, when the tensile strength of the material of the finally produced steel sheet is 980 to 1180 MPa, the microstructure of the base steel may be composed of 20 to 40% of ferrite, 10 to 30% of residual austenite and the remainder being martensite.

For example, when the tensile strength of the material of the finally produced steel sheet is 1180 to 1470 MPa, the microstructure of the base steel may be composed of 5 to 25% of ferrite, 10 to 30% of residual austenite and the remainder being martensite.

For example, when the tensile strength of the material of the finally produced steel sheet is 1470 MPa or more, the microstructure of the base steel may be composed of 0 to 10% (including 0%) of ferrite, 10 to 30% of residual austenite and the remainder being martensite.

The applicable welding current range of the galvanized steel sheet is 6.0 kA to 7.5 kA, and, when welding the galvanized steel sheet, it is characterized in that the possibility of liquid metal embrittlement (LME) that the zinc-plated layer melts and penetrates the surface of the base steel to cause embrittlement is 0%.

The material of the finally produced steel sheet has a yield strength of 600 MPa or more, a tensile strength of 980 MPa or more, and a total elongation of 10% or more.

In the case of the final material, the product of the tensile strength and total elongation is approximately 26,500, which generally exceeds the value of 25,000, which is the product of the tensile strength and total elongation generally suggested as a high-moldability steel sheet at that strength level. Through this, it can be estimated that it can have superior moldability to existing ultra-high-strength steels of the same strength.

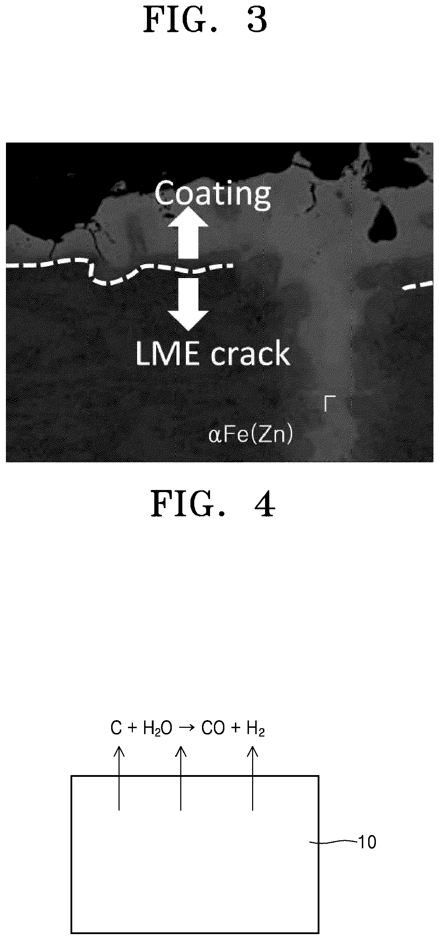

FIG. 3 illustrates a photograph of the appearance of a liquid metal embrittlement crack occurring in a galvanized steel sheet as a comparative example of the present invention.

When spot welding is performed on a typical galvanized steel sheet in an automobile assembly line, the zinc-plated layer melts and the molten metal zinc penetrates toward the interface of residual austenite in the base steel surface layer of the galvanized steel sheet, which may cause liquid metal embrittlement (LME). Due to this liquid metal embrittlement (LME) phenomenon, a liquid metal embrittlement crack (LME crack) occurs, and the welding strength drops sharply. Accordingly, there is a problem that a weldable current range narrows. That is, when spot welding (resistance spot welding) of an ultra-high-strength galvanized steel sheet, the melting point of a plated layer is very low (420°C) in the case of a molten galvanized steel sheet (GI), and a molten metal zinc is formed due to a peritectonic reaction at around 780°C in the case of an alloyed galvanized steel sheet. The formed molten metal zinc penetrates along the grain boundaries of a base material in a region where the load is generated by a welding electrode at a high temperature, so the strength of the base material is rapidly degraded. Referring to FIG. 3, it can be confirmed that austenite is phase-transformed into $\alpha$Fe(Zn) at high temperatures by zinc diffused toward the base material around the liquid metal embrittlement crack (LME crack). Since the $\alpha$Fe(Zn) is a material with very high embrittlement, the embrittlement of the steel sheet is further accelerated by this phase transformation. Accordingly, the frequency of occurrence of liquid metal embrittlement (LME) is more sensitive as the amount of residual austenite increases, and it was confirmed that the method of avoiding austenite existing in the surface layer can improve weldability.

In the method of manufacturing an ultra-high strength galvanized steel sheet with excellent weldability according to an embodiment of the present invention, the phase fraction control of the steel sheet is made by the developed alloy composition and the subsequent heat treatment (annealing/cooling/reheating) process, and the austenite phase formed in the currently developed composition and the annealing step transforms into martensite/bainite or remains as austenite during the cooling and reheating processes among the subsequent heat treatment, thereby creating a composite phase.

FIG. 4 illustrates an outline of a decarburization reaction in the method of manufacturing an ultra-high strength galvanized steel sheet according to an embodiment of the present invention.

If the temperature developed in the above-described annealing step is a region where the austenite phase is formed, but the dew point temperature of the atmosphere in the annealing furnace is increased to -10°C or higher, carbon, which is an austenite-stabilizing element, is oxidized on the surface of the base steel 10 and volatilized in the form of carbon monoxide, so that a decarburization reaction can proceed by a continuous reaction. This reaction can be expressed by Formula 1 below:

$$\text{<Formula 1>} \qquad C\ (s) + H_2O\ (g) \rightarrow CO\ (g) + H_2\ (g)$$

If the surface layer is depleted of carbon due to the continued decarburization reaction and the austenite in the surface layer has already transformed into ferrite also during the annealing step, austenite is not formed in the surface layer during the subsequent cooling/reheating step, and a single-phase ferrite structure can be secured even at room temperature which is a final step. The austenite, which is sensitive to LME cracks, can be avoided by the single-phase ferrite structure formed on the surface layer, thereby expanding the weldable current range and improving the weld strength.

## Experimental examples

Hereinafter, preferred experimental examples are presented to help understand the present invention. However, the following experimental examples are only intended to help understand the present invention, and the present invention is not limited to the following experimental examples.

Table 1 shows the composition of an ultra-high strength cold-rolled steel sheet according to experimental examples of the present invention, and Table 2 shows the process conditions of an ultra-high strength cold-rolled steel sheet according to experimental examples of the present invention

[Table 1]

| Ingredient | C | Si | Mn | P | S | Al | Ti+Mo+Nb |
|---|---|---|---|---|---|---|---|
| Content | 0.15 | 2.0 | 2.5 | 0.01 | 0.003 | 0.03 | 0.03 |

[Table 2]

| Hot-rolling process | Reheating temperature: 1200°C, finish delivery temperature: 900°C, coiling temperature: 600°C |
|---|---|
| Heat treatment process | Annealing temperature: 850°C, slow cooling temperature: 700°C, rapid cooling temperature: 250°C, reheating temperature: 460°C |

Steel having the composition (unit: % by weight) of Table 1 was prepared, and a hot-rolled steel sheet manufactured through a predetermined hot-rolling process was prepared. Both the example and the comparative example have the same alloy composition. Referring to Table 2, the conditions of the hot-rolling process were as follows: a reheating temperature: 1200°C, a finish delivery temperature: 900°C, and a coiling temperature: 600°C. After the cold rolling process, process conditions were as follows: an annealing temperature: 850°C, a slow cooling temperature: 700°C, a rapid cooling temperature: 250°C, and a reheating temperature: 460°C.

First experimental example

The first experimental example of the present invention implemented a 1200 MPa Q&P steel by applying the composition of Table 1 and the process conditions of Table 2 described above, and then formed a molten zinc-plated (GI) steel sheet by molten zinc plating, and then performed a Gleeble test (700 to 900°C). The test conditions were as follows: a heating rate: 500°C/s, a holding time: 1 sec, and a deformation rate: 30 mm/s.

Table 3 shows whether liquid metal embrittlement (LME) occurs depending upon a dew point in the ultra-high strength cold-rolled steel sheet according to the first experimental example of the present invention. In Table 3, the dew point refers to the dew point dependent upon the moisture concentration in an annealing furnace, the general dew point refers to a dew point below -45°C (e.g., -50°C), and the high dew point refers to a dew point of 0°C. In addition, In addition, the temperatures of 700°C, 750°C, 800°C, 850°C, and 900°C represent the Gleeble test temperatures, and the 'LME' item means that the liquid metal embrittlement (LME) phenomenon occurs, and the 'No LME' item means that the liquid metal embrittlement (LME) phenomenon does not occur.

[Table 3]

| Classification | 700°C | 750°C | 800°C | 850°C | 900°C |
|---|---|---|---|---|---|
| general dew point | LME | LME | LME | LME | LME |
| high dew point | No LME | No LME | No LME | LME | LME |

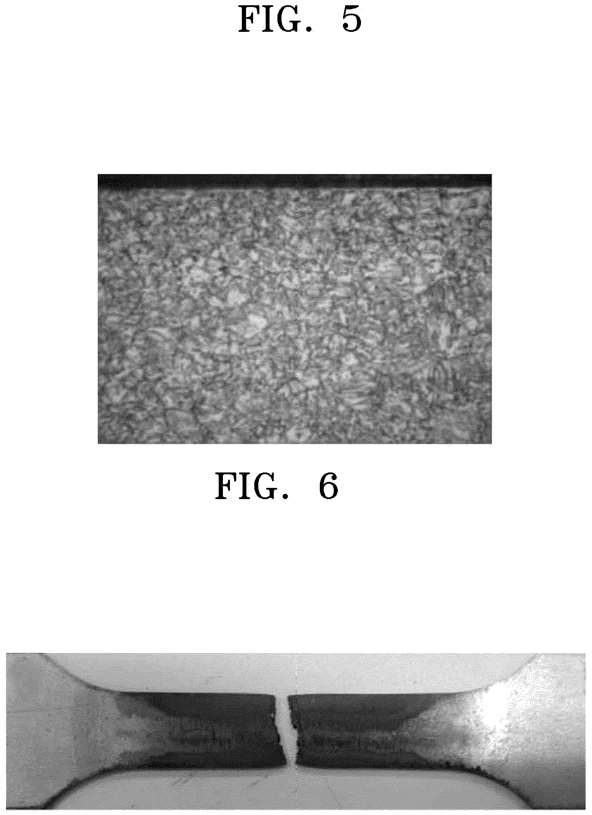

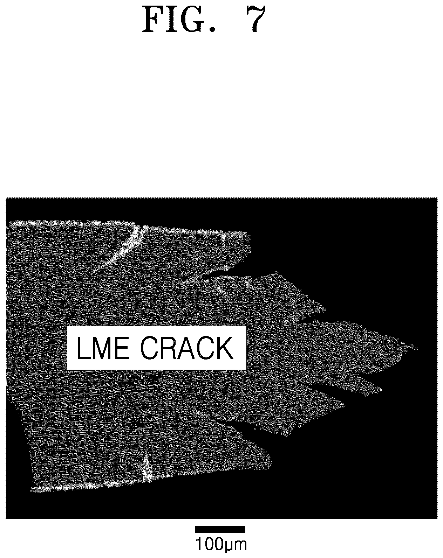

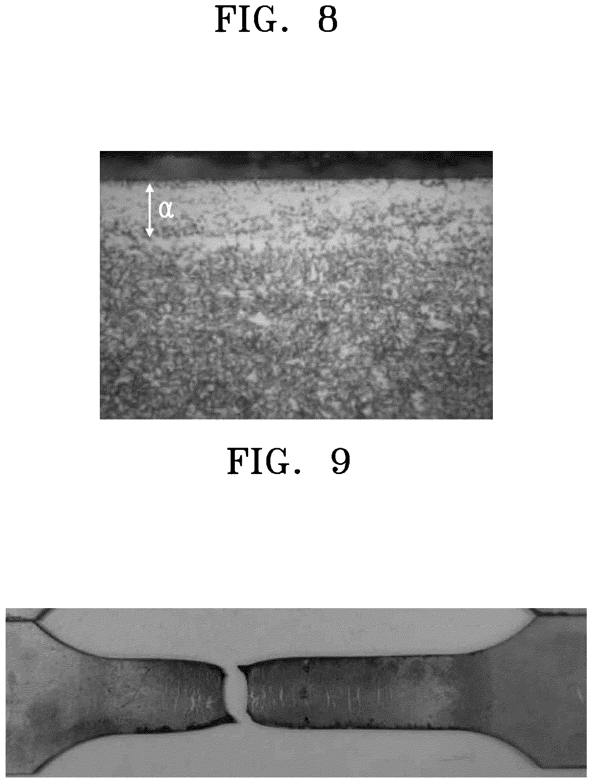

FIGS. 5 to 7 are photographs illustrating cross-sections including the surface layer of steel, elongation test evaluation results, and the occurrence of liquid metal embrittlement (LME) cracks, respectively, under 800°C Gleeble test temperature and normal dew point (DP<-45°C) conditions in the first experimental example of the present invention. In addition, FIGS. 8 to 10 are photographs illustrating a cross-section including the surface layer of steel, an elongation test evaluation result, and the occurrence of liquid metal embrittlement (LME) crack, respectively, under 800°C Gleeble test temperature and high dew point (DP 0°C) conditions in the first experimental example of the present invention. Referring to FIGS. 5 to 7 along with Table 3, it can be confirmed that the microstructure of the single phase of ferrite does not appear on the surface layer of the base steel in contact with the zinc-plated layer, and that a liquid metal embrittlement crack (LME crack) occurs, thereby reducing the elongation. In contrast, referring to FIGS. 8 to 10 together with Table 3, it can be confirmed that a single-phase ($\alpha$) ferrite microstructure appears on the surface layer of the base steel in contact with the zinc-plated layer, and that a liquid metal embrittlement crack (LME crack) does not occur, thereby improving the elongation characteristics.

Second experimental example

Table 4 relates to the second experimental example of the present invention and shows a decarburization layer thickness and liquid metal embrittlement (LME) occurrence dependent upon an annealing time and annealing moisture in an alloyed molten zinc-plated steel sheet implemented by applying the composition of Table 1 and the process conditions of Table 2 described above. In the second experimental example, the alloying temperature of the zinc plating treatment was 530°C. In the case where the dew point is +15°C or higher, it may cause problems such as corrosion of equipment in the annealing furnace, so it was excluded from the experimental example.

[Table 4]

| | annealing temperature | annealing time | Cold-rolling annealing atmosphere | | | Cold-rolled material | Welding |
|---|---|---|---|---|---|---|---|
| | | | Hydrogen concentration | Dew point in furnace | Moisture concentration in furnace | decarburization layer thickness | LME occurrence rate |
| Comparative Example 1 | 850°C | 60s | 5 to 7% | -50°C | 40ppm | 0 $\mu$m | 100% |
| Comparative Example 2 | 850°C | 60s | 5 to 7% | -60°C | 10ppm | 0 $\mu$m | 100% |
| Comparative Example 3 | 850°C | 90s | 5 to 7% | -50°C | 40ppm | 0 $\mu$m | 100% |
| Comparative Example 4 | 850°C | 130s | 5 to 7% | -50°C | 40ppm | 5 $\mu$m | 80% |
| Comparative Example 5 | 850°C | 60s | 5 to 7% | -30°C | 375ppm | 0 $\mu$m | 100% |
| Comparative Example 6 | 850°C | 90s | 5 to 7% | -30°C | 375ppm | 7 $\mu$m | 30% |
| Comparative Example 7 | 850°C | 60s | 5 to 7% | -10°C | 2600ppm | 16 $\mu$m | 22% |
| Example 1 | 850°C | 130s | 5 to 7% | -30°C | 375ppm | 18 $\mu$m | 0% |
| Example 2 | 850°C | 90s | 5 to 7% | -10°C | 2600ppm | 22 $\mu$m | 0% |
| Example 3 | 850°C | 60s | 5 to 7% | +5°C | 8500ppm | 24 $\mu$m | 0% |
| Example 4 | 850°C | 130s | 5 to 7% | -10°C | 2600ppm | 30 $\mu$m | 0% |
| Example 5 | 850°C | 90s | 5 to 7% | +5°C | 8500ppm | 31 $\mu$m | 0% |
| Example 6 | 850°C | 130s | 5 to 7% | +5°C | 8500ppm | 34 $\mu$m | 0% |

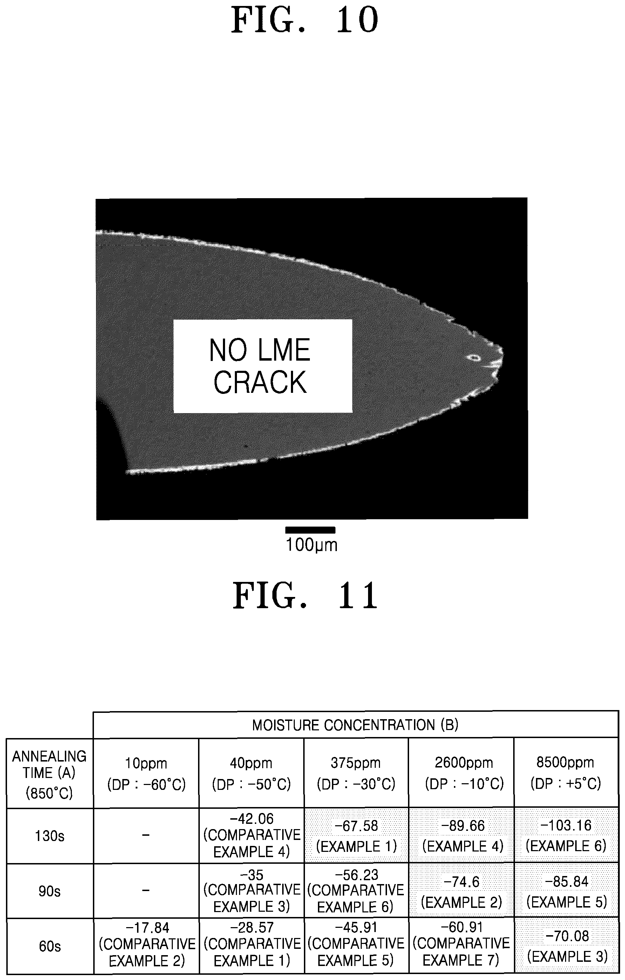

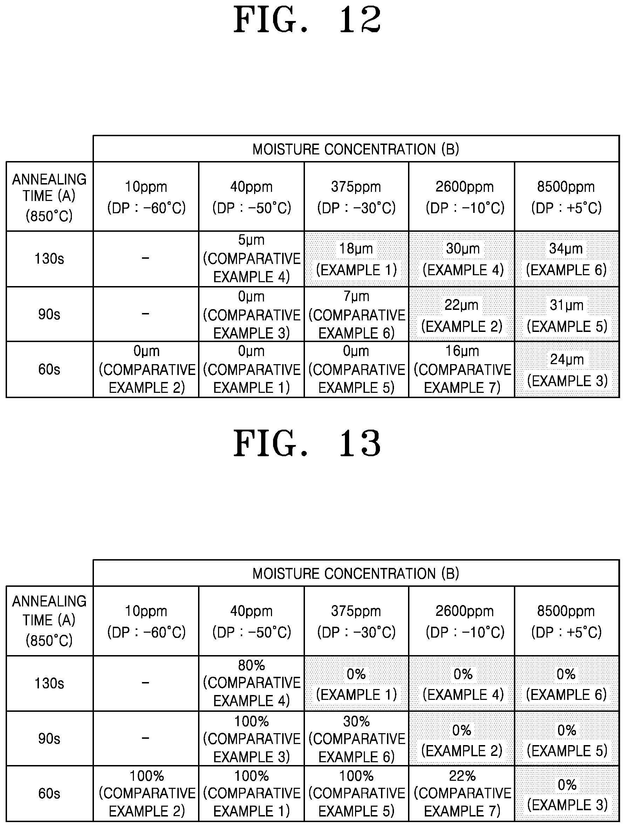

FIG. 11 shows the product of the positive square root ($A^{1/2}$) of the annealing time (A) and the natural logarithm value ($\ln(1/B)$) for the reciprocal value of the moisture concentration (B) in the annealing furnace according to the second experimental example of the present invention, FIG. 12 shows the thickness of the decarburization layer, formed on the surface layer of the base steel, dependent upon the annealing time (A) and the moisture concentration (B) in the annealing furnace according to the second experimental example of the present invention, FIG. 13 shows the liquid metal embrittlement (LME) occurrence rate dependent upon the annealing time (A) and the moisture concentration (B) in the annealing furnace according to the second experimental example of the present invention. For reference, in FIG. 11, the unit of the annealing time (A) is seconds (s), and the unit of the moisture concentration (B) is ppm. Referring to Table 4 and FIGS. 11 to 13, it was confirmed that, when the annealing step was performed (Examples 1 to 6) under conditions where the annealing time (A) and the moisture concentration (B) in the annealing furnace satisfied Equation 1 below, i) the possibility of liquid metal embrittlement (LME), which occurs when the zinc-plated layer melts and penetrates the surface of the base steel upon welding the galvanized steel sheet, causing embrittlement, was 0%, and ii) the thickness of the decarburization layer formed on the surface layer of the base steel was 18 $\mu$m or more.

<Equation 1>

$$(A)^{1/2} \times \ln(1/B) \leq -65$$

In contrast, it was confirmed that, when the annealing step was performed (Comparative Examples 1 to 7) under conditions where the annealing time (A) and the moisture concentration (B) in the annealing furnace did not satisfy Equation 1, i) the possibility of liquid metal embrittlement (LME), which occurs when the zinc-plated layer melts and penetrates the surface of the base steel upon welding the galvanized steel sheet, causing embrittlement, was shown to be significant, and ii) the thickness of the decarburization layer formed on the surface layer of the base steel was less than 18

μmT.

That is, it was confirmed that, in the method of manufacturing an ultra-high strength galvanized steel sheet with excellent weldability, the annealing can be controlled such that the moisture concentration (B) in the annealing furnace increases as the annealing time (A) for performing the annealing is short, and the annealing can be controlled such that the annealing time (A) for performing the annealing increases as the moisture concentration (B) in the annealing furnace decreases.

Accordingly, when annealing the cold-rolled steel sheet in the annealing furnace according to the method of manufacturing an ultra-high strength galvanized steel sheet with excellent weldability according to an aspect of the present invention, the annealing time (A) for performing the annealing and the moisture concentration (B) in the annealing furnace can be controlled based on the product of the positive square root ($A^{1/2}$) of the annealing time and the natural logarithm value ($\ln(1/B)$) of the reciprocal value of the moisture concentration.

As examined above, the first parameter of Equation 1 expressed as the product of the positive square root ($A^{1/2}$) of the annealing time (A) and the natural logarithm value ($\ln(1/B)$) for the reciprocal value of the moisture concentration (B) can be said to have technical significance as a factor that can simultaneously and effectively control the decarburization layer thickness and the liquid metal embrittlement (LME) occurrence rate in ultra-high strength galvanized steel sheet. For example, since the positive square root ($A^{1/2}$) of the annealing time (A) is the same, but the decarburization layer thickness is significantly changed depending upon the natural logarithm value ($\ln(1/B)$) for the reciprocal value of the moisture concentration (B) in Comparative Examples 3 and 6 and Examples 2 and 5, and the natural logarithm value ($\ln(1/B)$) for the reciprocal value of the moisture concentration (B) is the same, but the liquid metal embrittlement (LME) occurrence rate is significantly changed depending upon the positive square root ($A^{1/2}$) of the annealing time (A) in Examples 4 and 2 and Comparative Example 7, the decarburization layer thickness and the liquid metal embrittlement (LME) occurrence rate cannot be effectively controlled at the same time only with the annealing time (A) or the moisture concentration (B). In this respect, the first parameter described above has a causal relationship with a better effect, and it is not just a different way of expressing the known properties, so it can be said to have technical significance.

Meanwhile, referring to Table 4, it can be confirmed that, as the dew point is high and the annealing time is long, the decarburization amount increases and the ability to avoid liquid metal embrittlement (LME) is superior. Ti may be necessary to secure a decarburization layer thickness of 18 μm or more so as to improve the liquid metal embrittlement (LME).

Third experimental example

In the third experimental example of the present invention, 1200 MPa grade Q&P steel was implemented by applying the composition of Table 1 and the process conditions of Table 2 described above, and a molten zinc-plated (GI) steel sheet was formed through molten zinc plating, and then a spot welding process was applied. The welding current was 0.5 kA lower than the spatter (expulsion) generation condition, and the LME evaluation was performed.

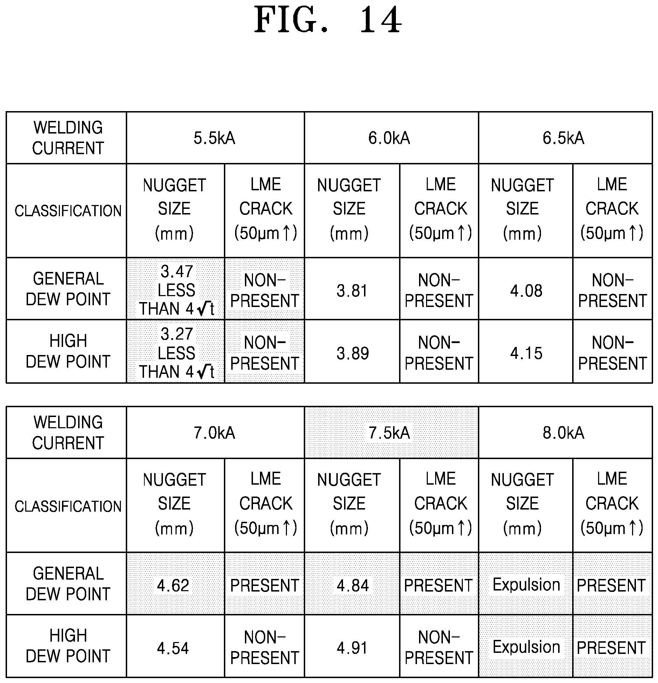

Table 5 shows the conditions of the spot welding process according to the third experimental example, and FIG. 14 shows the results of applying the spot welding process according to the third experimental example. In FIG. 14, the dew point refers to a dew point dependent upon the moisture concentration in the annealing furnace, and the general dew point refers to a dew point below -45°C (e.g., -50°C), and the high dew point refers to a dew point of 0°C.

[Table 5]

| Weld Control | Electrode tip | Applied pressure | No. of Pulses | Welding time | Holding time |
|---|---|---|---|---|---|
| DC | Φ6 mm | 3.5 kN | 1 | 350 ms | 100 ms |

Referring to Table 5 and FIG. 14, it was confirmed that in the method of manufacturing an ultra-high strength galvanized steel sheet with excellent weldability according to the comparative example of the present invention, annealing treatment was performed at a dew point of less than - 45°C and an applicable welding current range was 6.0 kA to 6.5 kA, whereas, in the method of manufacturing an ultra-high strength galvanized steel sheet with excellent weldability according to the example of the present invention, annealing treatment was performed at a dew point of 0°C and an applicable welding current range was 6.0 kA to 7.5 kA. Accordingly, it can be confirmed that, in the method of manufacturing an ultra-high strength galvanized steel sheet with excellent weldability according to the example of the present invention, strength can be secured even under existing welding conditions by suppressing the surface layer austenite phase that is the cause of LME cracks in the welded portion, and defects in the spot welding process can be suppressed by expanding the total weldable range.

The present invention has been described with reference to the embodiments thereof, but various changes or modifications can be made by those skilled in the art. So long as these changes and modifications do not go beyond the scope of the present invention, they are included in the scope of the present invention. Therefore, the scope of the present invention should be determined by the accompanying claims.

**Claims**

1.  A method of manufacturing an ultra-high strength galvanized steel sheet with excellent weldability, the method comprising: annealing a cold-rolled steel sheet in an annealing furnace,
    wherein an annealing time (A) for performing the annealing and a moisture concentration (B) in the annealing furnace are controlled based on a product of a positive square root ($A^{1/2}$) of the annealing time and a natural logarithm value ($\ln(1/B)$) of a reciprocal value of the moisture concentration.

2.  The method according to claim 1, wherein the annealing is controlled such that the moisture concentration (B) in the annealing furnace increases as the annealing time (A) for performing the annealing is short.

3.  The method according to claim 1, wherein the annealing is controlled such that the annealing time (A) for performing the annealing increases as the moisture concentration (B) in the annealing furnace is low.

4.  The method according to claim 1, wherein the cold-rolled steel sheet comprises carbon (C): 0.1 to 0.5%; silicon (Si): 1.0 to 3.0%; manganese (Mn): 1.5 to 3.5%; phosphorus (P): greater than 0 and 0.02% or less; sulfur (S): greater than 0% and 0.01% or less; aluminum (Al): greater than 0% and 0.1% or less; and nitrogen (N): greater than 0% and 0.01% or less, based on % by weight and comprises a remainder being iron (Fe); and other unavoidable impurities.

5.  The method according to claim 4, wherein the annealing is performed at a temperature corresponding to a dual phase range of austenite and ferrite, the annealing induces a decarburization reaction on the surface of the steel sheet, thereby the annealing comprises transforming austenite present in a surface layer of the steel sheet into ferrite.

6.  The method according to claim 4, wherein the annealing is performed at an annealing temperature of 830 to 900°C.

7.  The method according to claim 5, wherein the annealing is performed under a condition where the annealing time (A) and the moisture concentration (B) in the annealing furnace satisfy Equation 1 below:

$$<\text{Equation 1}>$$

$$(A)^{1/2} \times \ln(1/B) \le -65$$

8.  The method according to claim 7, further comprising: after the annealing,

    first cooling the steel sheet at an average cooling rate of 1 to 20°C/s and at a temperature of 600°C or more and less than 800°C;
    second cooling the steel sheet at an average cooling rate of 20°C/s or more and a temperature of 200°C or more and less than 300°C;
    reheating the steel sheet up to 350°C to 490°C and maintaining it for 100 second or less; and
    performing zinc plating treatment on the steel sheet.

9.  The method according to claim 8, wherein a microstructure of a single phase of ferrite is formed on a surface layer of the steel sheet after performing the zinc plating treatment, and a decarburization layer formed on the surface layer of the steel sheet has a thickness of 18 $\mu$m or more.

10. The method according to claim 8, wherein an applicable welding current range of the galvanized steel sheet is 6.0 kA to 7.5 kA.

11. An ultra-high strength galvanized steel sheet with excellent weldability, comprising:

    a base steel comprising carbon (C): 0.1 to 0.5%; silicon (Si): 1.0 to 3.0%; manganese (Mn): 1.5 to 3.5%; phosphorus (P): greater than 0 and 0.02% or less; sulfur (S): greater than 0% and 0.01% or less; aluminum (Al): greater than 0% and 0.1% or less; nitrogen (N): greater than 0% and 0.01% or less, based on % by weight,; and a remainder being iron (Fe) and other unavoidable impurities; and

a zinc-plated layer formed on the base steel,

wherein a microstructure of a single phase of ferrite is formed on a surface layer of the base steel in contact with the zinc-plated layer, and a decarburization layer formed on the surface layer of the base steel has a thickness of 18 $\mu$m or more,

wherein the microstructure of the base steel comprises 0 to 40% of ferrite, 10 to 30% of residual austenite and a remainder being martensite.

12. The ultra-high strength galvanized steel sheet according to claim 11, wherein an applicable welding current range of the galvanized steel sheet is 6.0 kA to 7.5 kA.

# FIG. 1

| PROVIDE STEEL | S10 |
| HOT-ROLL | S20 |
| COLD-ROLL | S30 |
| ANNEAL | S40 |
| FIRST COOL | S50 |
| SECOND COOL | S60 |
| REHEAT | S70 |
| GALVANIZE | S80 |

# FIG. 2

# FIG. 3

# FIG. 4

$$C + H_2O \rightarrow CO + H_2$$

10

FIG. 5

FIG. 6

# FIG. 7

100μm

FIG. 8

FIG. 9

# FIG. 10

NO LME
CRACK

100μm

# FIG. 11

| ANNEALING TIME (A) (850°C) | MOISTURE CONCENTRATION (B) | | | | |
|---|---|---|---|---|---|
| | 10ppm (DP : -60°C) | 40ppm (DP : -50°C) | 375ppm (DP : -30°C) | 2600ppm (DP : -10°C) | 8500ppm (DP : +5°C) |
| 130s | – | -42.06 (COMPARATIVE EXAMPLE 4) | -67.58 (EXAMPLE 1) | -89.66 (EXAMPLE 4) | -103.16 (EXAMPLE 6) |
| 90s | – | -35 (COMPARATIVE EXAMPLE 3) | -56.23 (COMPARATIVE EXAMPLE 6) | -74.6 (EXAMPLE 2) | -85.84 (EXAMPLE 5) |
| 60s | -17.84 (COMPARATIVE EXAMPLE 2) | -28.57 (COMPARATIVE EXAMPLE 1) | -45.91 (COMPARATIVE EXAMPLE 5) | -60.91 (COMPARATIVE EXAMPLE 7) | -70.08 (EXAMPLE 3) |

...

# FIG. 12

| ANNEALING TIME (A) (850°C) | MOISTURE CONCENTRATION (B) | | | | |
|---|---|---|---|---|---|
| | 10ppm (DP : −60°C) | 40ppm (DP : −50°C) | 375ppm (DP : −30°C) | 2600ppm (DP : −10°C) | 8500ppm (DP : +5°C) |
| 130s | – | 5μm (COMPARATIVE EXAMPLE 4) | 18μm (EXAMPLE 1) | 30μm (EXAMPLE 4) | 34μm (EXAMPLE 6) |
| 90s | – | 0μm (COMPARATIVE EXAMPLE 3) | 7μm (COMPARATIVE EXAMPLE 6) | 22μm (EXAMPLE 2) | 31μm (EXAMPLE 5) |
| 60s | 0μm (COMPARATIVE EXAMPLE 2) | 0μm (COMPARATIVE EXAMPLE 1) | 0μm (COMPARATIVE EXAMPLE 5) | 16μm (COMPARATIVE EXAMPLE 7) | 24μm (EXAMPLE 3) |

# FIG. 13

| ANNEALING TIME (A) (850°C) | MOISTURE CONCENTRATION (B) | | | | |
|---|---|---|---|---|---|
| | 10ppm (DP : −60°C) | 40ppm (DP : −50°C) | 375ppm (DP : −30°C) | 2600ppm (DP : −10°C) | 8500ppm (DP : +5°C) |
| 130s | – | 80% (COMPARATIVE EXAMPLE 4) | 0% (EXAMPLE 1) | 0% (EXAMPLE 4) | 0% (EXAMPLE 6) |
| 90s | – | 100% (COMPARATIVE EXAMPLE 3) | 30% (COMPARATIVE EXAMPLE 6) | 0% (EXAMPLE 2) | 0% (EXAMPLE 5) |
| 60s | 100% (COMPARATIVE EXAMPLE 2) | 100% (COMPARATIVE EXAMPLE 1) | 100% (COMPARATIVE EXAMPLE 5) | 22% (COMPARATIVE EXAMPLE 7) | 0% (EXAMPLE 3) |

# FIG. 14

| WELDING CURRENT | 5.5kA | | 6.0kA | | 6.5kA | |
|---|---|---|---|---|---|---|
| CLASSIFICATION | NUGGET SIZE (mm) | LME CRACK (50μm↑) | NUGGET SIZE (mm) | LME CRACK (50μm↑) | NUGGET SIZE (mm) | LME CRACK (50μm↑) |
| GENERAL DEW POINT | 3.47 LESS THAN 4√t | NON-PRESENT | 3.81 | NON-PRESENT | 4.08 | NON-PRESENT |
| HIGH DEW POINT | 3.27 LESS THAN 4√t | NON-PRESENT | 3.89 | NON-PRESENT | 4.15 | NON-PRESENT |

| WELDING CURRENT | 7.0kA | | 7.5kA | | 8.0kA | |
|---|---|---|---|---|---|---|
| CLASSIFICATION | NUGGET SIZE (mm) | LME CRACK (50μm↑) | NUGGET SIZE (mm) | LME CRACK (50μm↑) | NUGGET SIZE (mm) | LME CRACK (50μm↑) |
| GENERAL DEW POINT | 4.62 | PRESENT | 4.84 | PRESENT | Expulsion | PRESENT |
| HIGH DEW POINT | 4.54 | NON-PRESENT | 4.91 | NON-PRESENT | Expulsion | PRESENT |

## INTERNATIONAL SEARCH REPORT

| International application No. |
|---|
| **PCT/KR2022/019624** |

| A. | CLASSIFICATION OF SUBJECT MATTER |
|---|---|

**C23C 2/02**(2006.01)i; **C23C 2/06**(2006.01)i; **C23C 2/40**(2006.01)i; **C21D 8/02**(2006.01)i; **C22C 38/14**(2006.01)i; **C22C 38/12**(2006.01)i; **C22C 38/04**(2006.01)i; **C22C 38/02**(2006.01)i; **C22C 38/00**(2006.01)i

According to International Patent Classification (IPC) or to both national classification and IPC

| B. | FIELDS SEARCHED |
|---|---|

Minimum documentation searched (classification system followed by classification symbols)

C23C 2/02(2006.01); C21D 1/74(2006.01); C21D 3/04(2006.01); C21D 8/02(2006.01); C21D 9/46(2006.01); C22C 38/14(2006.01); C22C 38/34(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 소둔(annealing), 시간(time), 수분(water), 용접성(weldability), 제어(control)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | KR 10-2021-0062887 A (HYUNDAI STEEL COMPANY) 01 June 2021 (2021-06-01) See paragraph [0072] and claims 1 and 6-7. | 11-12 |
| A | | 1-10 |
| Y | KR 10-2017-0071658 A (POSCO) 26 June 2017 (2017-06-26) See claim 1. | 11-12 |
| A | KR 10-2019-0073200 A (POSCO) 26 June 2019 (2019-06-26) See claims 1-2 and 15. | 1-12 |
| A | JP 2018-016851 A (JFE STEEL CORP.) 01 February 2018 (2018-02-01) See claim 1. | 1-12 |
| A | KR 10-1824823 B1 (JFE STEEL CORPORATION) 01 February 2018 (2018-02-01) See claim 2. | 1-12 |

☐ Further documents are listed in the continuation of Box C. ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **18 August 2023** | **21 August 2023** |

| Name and mailing address of the ISA/KR | Authorized officer |
|---|---|
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2022/019624**

| Patent document cited in search report | | | Publication date (day/month/year) | Patent family member(s) | | | Publication date (day/month/year) |
|---|---|---|---|---|---|---|---|
| KR | 10-2021-0062887 | A | 01 June 2021 | KR | 10-2312424 | B1 | 12 October 2021 |
| KR | 10-2017-0071658 | A | 26 June 2017 | CN | 108431273 | A | 21 August 2018 |
| | | | | CN | 108431273 | B | 12 June 2020 |
| | | | | EP | 3392363 | A1 | 24 October 2018 |
| | | | | EP | 3392363 | B1 | 25 March 2020 |
| | | | | JP | 2019-504196 | A | 14 February 2019 |
| | | | | JP | 6763023 | B2 | 30 September 2020 |
| | | | | KR | 10-1758485 | B1 | 17 July 2017 |
| | | | | MX | 2018007347 | A | 24 August 2018 |
| | | | | US | 10900097 | B2 | 26 January 2021 |
| | | | | US | 2018-0371570 | A1 | 27 December 2018 |
| | | | | WO | 2017-105064 | A1 | 22 June 2017 |
| KR | 10-2019-0073200 | A | 26 June 2019 | KR | 10-2266855 | B1 | 18 June 2021 |
| JP | 2018-016851 | A | 01 February 2018 | MX | 2017009673 | A | 10 September 2018 |
| KR | 10-1824823 | B1 | 01 February 2018 | CN | 105531388 | A | 27 April 2016 |
| | | | | EP | 3040440 | A1 | 06 July 2016 |
| | | | | EP | 3040440 | B1 | 06 March 2019 |
| | | | | JP | 6128223 | B2 | 17 May 2017 |
| | | | | JP | WO2015-029404 | A1 | 02 March 2017 |
| | | | | KR | 10-2016-0048882 | A | 04 May 2016 |
| | | | | MX | 2016002449 | A | 24 June 2016 |
| | | | | US | 2016-0214351 | A1 | 28 July 2016 |
| | | | | US | 9895863 | B2 | 20 February 2018 |
| | | | | WO | 2015-029404 | A1 | 05 March 2015 |

Form PCT/ISA/210 (patent family annex) (July 2022)

REFERENCES CITED IN THE DESCRIPTION

**Patent documents cited in the description**

- KR 20200075949 A